# EUROPÄISCHE PATENTSCHRIFT

(11) **EP 0 946 845 B1**
(45) Veröffentlichungstag und Bekanntmachung des Hinweises auf die Patenterteilung: **13.03.2002**
(21) Anmeldenummer: 97952776.9
(22) Anmeldetag: 18.11.1997
(51) Int. Cl.: F17C 13/04

(54) **ANSCHLUSSADAPTER**
CONNECTION ADAPTOR
ADAPTATEUR DE RACCORDEMENT

(30) Priorität: 18.11.1996 DE 29619912 U
(43) Veröffentlichungstag der Anmeldung: 06.10.1999
(73) Patentinhaber: Weh GmbH, Verbindungstechnik, D-89257 Illertissen (DE)
(72) Erfinder: WEH, Wolfgang, D-89257 Illertissen (DE); WEH, Erwin, D-89257 Illertissen (DE)
(74) Vertreter: Fiener, Josef
(86) Internationale Anmeldenummer: EP9706413
(87) Internationale Veröffentlichungsnummer: WO9822746

(56) Entgegenhaltungen:
- DE-A- 2 228 656
- DE-B- 1 042 329
- DE-U- 9 115 142
- US-A- 5 282 493

## Beschreibung

Die Erfindung betrifft einen Anschlußadapter, insbesondere für Gasflaschenventile, mit einer klammmerförmigen Umgriffshalterung und einer Anschlußkolbenhülse, die gegenüber der Umgriffshalterung mittels einer Betätigungseinrichtung axial beweglich ist und in Anschlußstellung dichtend an einem Gegenanschluß anliegt.

Ein derartiger Anschlußadapter in Form eines Füllanschlusses für Gasflaschenventile, insbesondere von Azetylenflaschen ist aus der DE-U-9115142 bekannt. Der Füllanschluß besteht dabei aus einem zylinderischen Gehäuse, das einerseits einen Fülleinlaß mit einem Füllschlauch aufweist, während auf der gegenüberliegenden Seite des Gehäuses eine Ventilansetzhalterung ausgebildet, die eine seitliche Ventileinführöffnung in einen Aufnahmeraum aufweist. In Draufsicht hat hierbei die Umgriffshalterung die Form einer Halteklammer, so daß der Anschlußadapter seitlich an das Ventil angesetzt werden kann. Im Bereich der Umgriffsseite ist hierbei auch eine Einstellschraube vorgesehen, so daß die Größe des Ventilaufnahmeraumes in Anpassung an den jeweils vorhandenen Gegenanschluß variiert werden kann. Aus der DE 1 042 329 ist eine weitere Ausführungform eines Anschlußadapters bekannt.

Obwohl sich dieser Füllanschluß grundsätzlich bewährt hat, ist der Aufbau relativ aufwendig. Dies gilt auch für die Betätigungseinrichtung, mit der die Anschlußkolbenhülse axial beweglich ist und in Anschlußstellung dichtend an den Gegenanschluß bzw. das Gasflaschenventil anliegt. So wird einerseits ein Exzenteranschluß beschrieben, der jedoch in der Herstellung relativ aufwendig und platzraubend ist. Weiterhin wird auch eine drucktellerförmige Betätigungseinrichtung beschrieben, mit der durch manuellen Axialdruck der Füllanschluß gelöst bzw. angeschlossen werden kann. Die Betätigung kann hierbei jedoch problematisch sein, insbesondere wenn durchmessergrößere Schläuche angeschlossen werden, so daß die Betätigungseinrichtung nicht mehr oder nur mit ungünstiger Handhaltung bedienbar ist. Weiterhin ist bei den beschriebenen Verriegelungseinrichtungen mit Federdruck der Aufbau relativ aufwendig.

Demzufolge liegt der Erfindung die Aufgabe zugrunde, einen Anschlußadapter der eingangs genannten Art hinsichtlich der einfacheren Bedienung und des einfacheren Aufbaus zu verbessern. Zudem soll der Anschlußadapter möglichst kompakt, glattflächig und leicht zu reinigen sein.

Diese Aufgabe wird gelöst mit einen Anschlußadapter gemäß den Merkmalen des Patentanspruches 1.

Durch die Ausbildung der Betätigungseinrichtung in Form einer Schraubhülse, durch die sich die Anschlußkolbenhülse zentral hindurcherstreckt, kann der Anschlußadapter mit einem Minimum an Bauteilen realisiert werden. So ergibt sich gegenüber dem eingangs gewürdigten Stand der Technik etwa eine Halbierung der erforderlichen Bauteile. Zudem sind diese im wesentlichen einfache Drehteile, so daß der vorgeschlagene Anschlußadapter sehr preisgünstig hergestellt werden kann. Insbesondere kann durch die zentral hindurchgeführte Fluidpassage auf sich seitlich in radialer Richtung anschließende Schlauchanschlüsse verzichtet werden, was insbesondere günstig ist, wenn der Gegenanschluß nur von einer Richtung her zugänglich ist. Zudem wird hierdurch eine Umlenkung der Strömungsrichtung vermieden und die kompakte Bauweise begünstigt.

In bevorzugter Ausführungsform ist die Anschlußkolbenhülse mit einem gleitsteinartigen Verdrehsicherungselement versehen, so daß hierdurch die Anschlußkolbenhülse und der daran angeschlossene Entnahme-/Füllschlauch in seiner Verdrehlage nicht beeinflußt wird, also nicht verdrillt wird, da die Anschlußkolbenhülse in einer Schraubspindel gelagert und somit axial geführt ist. Zudem ist mit diesem Verdrehsicherungselement ein einfaches Einstellen des Axialhubes der Anschlußkolbenhülse möglich. Hierdurch kann beispielsweise auch Verschleiß des Dichtringes am Vorderende der Anschlußkolbenhülse in einfacher Weise ausgeglichen werden, so daß immer ein sicherer dichtender Abschluß am Gegenanschluß gewährleistet ist. Zudem wird hierdurch eine einfache Anbringung bzw. Austauschbarkeit von Codierpins für verschiedene Fluidsorten ermöglicht.

Weitere vorteilhafte Ausgestaltungen sind Gegenstand der Unteransprüche. Insbesondere sei darauf hingewiesen, daß die Schraubhülse die zum Schlauchanschluß hin zylinderisch geformte Umgriffshalterung eng umgibt, so daß insgesamt der Anschlußadapter eine sehr kompakte, glattflächige und daher leicht zu reinigende Außenform aufweist. Dies ist beispielsweise für die Reinigung und die Sterilisation im Krankenhauseinsatz besonders wichtig.

Nachfolgend werden zwei Ausführungsbeispiele anhand der Zeichnungen näher erläutert und beschrieben. Hierbei zeigen:
- Fig. 1: einen Anschlußadapter, der an einen Gegenanschluß angesetzt, jedoch noch nicht vollständig angeschlossen ist; und
- Fig. 2: die Anschlußstellung des Anschlußadapters nach Fig. 1, wobei in der unteren Hälfte eine alternative Ausführungsform der Umgriffshalterung eingezeichnet ist.

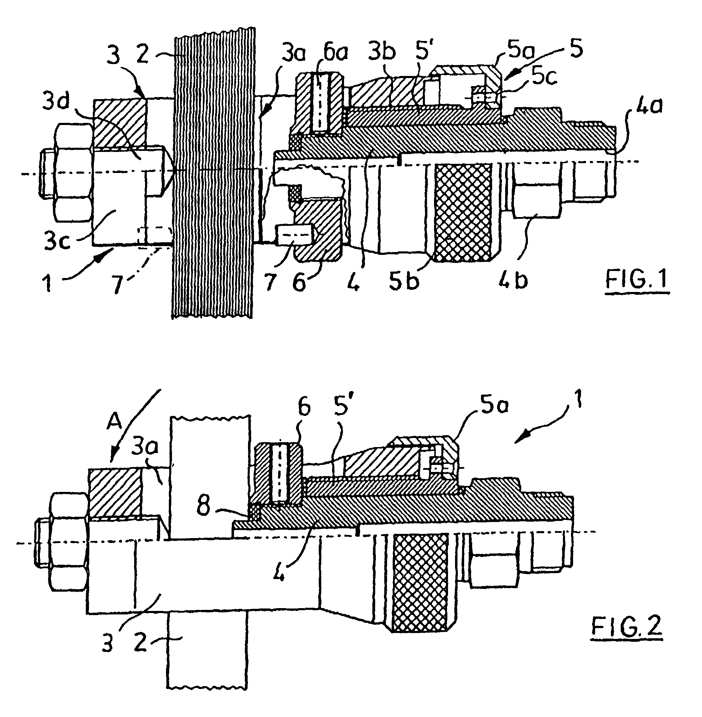

In Fig. 1 ist in Seitenansicht und im Halbschnitt ein Anschlußadapter 1 dargestellt, der an einen hier nur schematisch dargestellten Gegenanschluß 2 angeschlossen werden soll. Dieser hier liniert eingezeichnete Gegenanschluß 2 kann beispielsweise durch ein Gasflaschenventil gebildet sein, das eine Vierkant-Außenform aufweist. Als wesentliches Bauteil besitzt der Anschlußadapter 1 eine Umgriffshalterung 3, die den Gegenanschluß 2 klammerförmig umgibt. In der Draufsicht würde die Ausführungsform der Umgriffshalterung 3 gemäß Fig. 1 eine im wesentlichen C-förmige Form in Art einer Schraubzwinge aufweisen. Somit ist die zum Betrachter hin weisende Seite der Umgriffshalterung 3 offen, so daß der Anschlußadapter 1 in einfacher Weise hier von der Rückseite her an den Gegenanschluß 2 angesetzt werden kann, wobei sich links eine Umgriffsklammer oder -seite 3c und rechts die nachfolgend beschriebenen Bauteilen 4 bis 6 anschließen. Gemäß der Ausführung in Fig. 2, untere Hälfte kann der Gegenanschluß 2 auch allseitig von der Umgriffshalterung 3 umschlossen sein.

In der Umgriffshalterung 3 ist an der hier rechten Seite eine Anschlußkolbenhülse 4 mit einer zentral verlaufenden Fluidpassage 4a axial beweglich gelagert, deren hier nach rechts weisende Seite an einen Entnahme- bzw. Füllschlauch angeschlossen werden kann, während die hier nach links weisende Stirnseite der Anschlußkolbenhülse 4 in Anschlußstellung (vgl. Fig. 2) dichtend an dem Gegenanschluß 2 anliegen soll.

Die axiale Bewegung der Anschlußkolbenhülse 4 wird mittels einer Betätigungseinrichtung 5 in Form einer Schraubhülse 5a verwirklicht, die mittels einer Sicherungsschraube 5c drehfest mit einer Schraubspindel 5' verbunden ist. Die Schraubspindel 5' ist in der Umgriffshalterung 3 in einem Innen-Gewinde 3b einschraubbar, so daß sich die Schraubspindel 5' bei der Schraubbewegung mittels der Schraubhülse 5a hier nach links zum Aufnahmeraum 3a bewegen würde. Zur verbesserten Bedienbarkeit weist die Schraubhülse 5a am Außenumfang eine Rändelung 5b auf. Die Schraubspindel 5' greift hierbei direkt oder über einen flachen Gleitring an einem Verdrehsicherungselement 6 an, das in Art eines Gleitsteines im Aufnahmeraum 3a der Umgriffshalterung 3 bewegbar ist. Da das Verdrehsicherungselement 6 auf der Anschlußkolbenhülse 4 aufgeschraubt und durch eine radial verlaufende Befestigungsschraube 6a verdrehgesichert ist, wird somit die Anschlußkolbenhülse 4 darin exakt geführt und schlittenartig nur in Axialrichtung bewegt, jedoch eine Verdrehbewegung ausgeschlossen. Hierdurch wird ein Verdrillen des daran angeschlossenen Schlauches vermieden.

Bevorzugt weist das gleitsteinartige Verdrehsicherungselement 6 an der zum Gegenanschluß 2 hin weisenden Stirnseite einen Codier- oder Indexierstift 7 auf, so daß hierdurch bestimmte Kennungen zwischen Anschlußadapter 1 und Gegenanschluß 2 ermöglicht werden. Hierdurch kann beispielsweise die Verwechslungsgefahr unterschiedlicher, aus dem Gegenanschluß 2 entnommener Gase reduziert werden. Der in der sog. Pin-Index-Bauweise ausgeführte Indexierstift 7 kann hierbei auch an der gegenüberliegenden Umgriffsseite 3c der Umgriffshalterung 3 vorgesehen sein, wie dies strichpunktiert dargestellt ist. An dieser Umgriffsklammer oder -seite 3c der Umgriffshalterung 3 ist des weiteren eine Einstellschraube 3d mittig vorgesehen, so daß hierdurch die lichte Weite des Aufnahmeraumes 3a der Umgriffshalterung 3 eingestellt werden kann. Es sei darauf hingewiesen, daß auch das Verdrehsicherungselement 6 mittels der Befestigungsschraube 6a in einem gewissen Bereich verstellt werden kann, so daß hierdurch im Zusammenspiel mit der Einstellschraube 3d jeweils eine dichte Anlage der Anschlußkolbenhülse 4 an dem Gegenanschluß 2 gewährleistet werden kann.

In Fig. 2 ist die Anschlußstellung des Anschlußadapters 1 im Halbschnitt dargestellt. Wie hierbei aus der oberen Hälfte ersichtlich ist, ist gegenüber der in Fig. 1 dargestellten Ansetzstellung die Anschlußkolbenhülse 4 zum Gegenanschluß 2 hin axial verschoben, und zwar durch Drehen der Betätigungseinrichtung 5, nämlich der Schraubhülse 5a und der Schraubspindel 5'. Hierdurch ergibt sich die hier gezeigte Axialbewegung der Schraubspindel 5' und der Schraubhülse 5a gegenüber dem Außenumfang der Umgriffshalterung 3. Auch das Verdrehsicherungselement 6 hat sich zusammen mit der Anschlußkolbenhülse 4 nach links bewegt und zwar in dem rahmenartigen Aufnahmeraum 3a der Umgriffshalterung 3, wobei zugleich eine Verdrehsicherung der Anschlußkolbenhülse 4 erzielt wird. In der hier gezeigten Stellung liegt somit die Anschlußkolbenhülse 4 zusammen mit dem stirnseitigen Dichtring 8 an den Gegenanschluß 2 an. Der Dichtring 8 ist hierbei bevorzugt zwischen den vordersten Ringabsatz der Anschlußkolbenhülse 4 und dem gleitsteinartigen Verdrehsicherungselement 6 eingesetzt. Hierdurch ist der Dichtring 8 exakt geführt.

Weiterhin ist aus dem Vergleich zwischen den Fig. 1 und 2 ersichtlich, daß die Innenseite der Schraubhülse 5a eng am Außenumfang der zylinderisch geformten Umgriffshalterung 3 entlanggleitet, so daß hierdurch ein Eindringen von Schmutz in die Betätigungseinrichtung 5 und das Gewinde 3b an der Schraubspindel 5' vermieden wird. Zudem läßt sich der Anschlußadapter 1 auf einfache Weise zerlegen, beispielsweise indem die Befestigungsschraube 6a gelöst wird, dann das Verdrehsicherungselement 6 gelöst wird, indem beispielsweise die Anschlußkolbenhülse 4 an einem Mitnehmerprofil 4b, bevorzugt einem einstückig daran angeformten Außensechskant gedreht wird. Zudem kann auch die Sicherungsschraube 5c auf einfache Weise gelöst werden, so daß zum Reinigen eine einfache Demontage bzw. in umgekehrter Weise bei der Herstellung eine einfache, kostengünstige Montage ermöglicht wird.

In der unteren Hälfte des Halbschnittes gemäß Fig. 2 ist eine alternative Ausführungsform dargestellt, nämlich daß die Umgriffshalterung 3 auch auf der zum Betrachter hin weisenden Seite geschlossen ist. In diesem Falle könnte beispielsweise die Umgriffshalterung 3 nicht mehr von der Seite her aufgesetzt werden, sondern müßte gemäß dem Pfeil A über den Gegenanschluß 2 gestülpt werden. Da sich hierdurch jedoch eine größere Festigkeit der Umgriffshalterung 3 ergibt, kann diese rahmenartig geschlossene Bauweise gegenüber der schraubzwingenförmigen Bauweise in Fig. 1 für viele Anwendungsfälle von Vorteil sein.

## Patentansprüche

1. Anschlußadapter, insbesondere für Gasflaschenventile, mit einer klammmerförmigen Umgriffshalterung (3) und einer Anschlußkolbenhülse (4), die gegenüber der Umgriffshalterung (3) mittels einer Betätigungseinrichtung (5) axial beweglich ist und in Anschlußstellung dichtend an einem Gegenanschluß (2) anliegt,
**dadurch gekennzeichnet, daß**
die Betätigungseinrichtung (5) von einer Schraubhülse (5a) gebildet ist, durch die sich die Anschlußkolbenhülse (4) zentral hindurcherstreckt, wobei die Anschlußkolbenhülse (4) mit einem gleitsteinförmigen Verdrehsicherungselement (6) in der Umgriffshalterung (3) axial beweglich ist.

2. Anschlußadapter nach Anspruch 1,
**dadurch gekennzeichnet, daß**
das Verdrehsicherungselement (6) auf der Anschlußkolbenhülse (4) aufgeschraubt und verdrehgesichert ist.

3. Anschlußadapter nach Anspruch 1 oder 2,
**dadurch gekennzeichnet, daß**
die Anschlußkolbenhülse (4) eine mittig und axial verlaufende Fluidpassage (4a) aufweist.

4. Anschlußadapter nach einem der Ansprüche 1 bis 3,
**dadurch gekennzeichnet, daß**
die Anschlußkolbenhülse (4) ein angeformtes Mitnehmerprofil (4b) aufweist.

5. Anschlußadapter nach Anspruch 4,
**dadurch gekennzeichnet, daß**
das Mitnehmerprofil (4b) ein einstückig angeformter Außensechskant ist.

6. Anschlußadapter nach einem der Ansprüche 1 bis 5,
**dadurch gekennzeichnet, daß**
die Schraubhülse (5a) am Außenumfang eine Rändelung (5b) aufweist.

7. Anschlußadapter nach einem der Ansprüche 1 bis 6,
**dadurch gekennzeichnet, daß**
die Schraubhülse (5a) drehfest mit einer Schraubspindel (5') verbunden ist, die in die Umgriffshalterung (3) einschraubbar ist und gegenüber der Anschlußkolbenhülse (4) verdrehbar gelagert ist.

8. Anschlußadapter nach einem der Ansprüche 1 bis 7,
**dadurch gekennzeichnet, daß**
die Umgriffshalterung (3) an der der Anschlußkolbenhülse (4) gegenüberliegenden Umgriffsklammer (3c) eine Einstellschraube (3d) aufweist.

9. Anschlußadapter nach einem der Ansprüche 1 bis 8,
**dadurch gekennzeichnet, daß**
die Schraubhülse (5a) die zylinderisch geformte Umgriffshalterung (3) eng umfaßt.

10. Anschlußadapter nach einem der Ansprüche 1 bis 9,
**dadurch gekennzeichnet, daß**
die Umgriffshalterung (3) und/oder das Verdrehsicherungselement (6) einen Indexierstift (7) aufweist.

11. Anschlußadapter nach einem der Ansprüche 1 bis 10,
**dadurch gekennzeichnet, daß**
zwischen der Anschlußkolbenhülse (4) und dem Verdrehsicherungselement (6) stirnseitig ein Dichtring (8) zur Anlage an den Gegenanschluß (2) vorgesehen ist.

## Claims

1. Connection adaptor in particular for gas bottle valves with a clamp-like clamp mounting (3) and a connecting piston bush (4) which is axially moveable relative to the clamp mounting (3) by means of an actuating device (5) and which in its connected position bears upon a complementary connecting element (2) forming a seal,
**characterised in that**
the actuating device (5) is formed from a threaded sleeve (5a) through which the connecting piston bush (4) extends centrally, wherein the connecting piston bush (4) is axially moveable in the clamp mounting (3) with a sliding-block-like twist-proof element (6).

2. Connection adaptor according to claim 1,
**characterised in that**
the twist-proof element (6) is screwed onto the connecting piston bush (4) and secured against twisting.

3. Connection adaptor according to claim 1 or 2,
**characterised in that**
the connecting piston bush (4) has a centrally and axially extending fluid passage (4a).

4. Connection adaptor according to one of the claims 1 to 3,
**characterised in that**
the connecting piston bush (4) has an attached driver profile (4b).

5. Connection adaptor according to claim 4,
**characterised in that**
the driver profile (4b) is an external hexagon formed integrally.

6. Connection adaptor according to one of the claims 1 to 5,
**characterised in that**
the threaded sleeve (5a) has knurling (5b) on the exterior circumference.

7. Connection adaptor according to one of the claims 1 to 6,
**characterised in that**
the threaded sleeve (5a) is connected to a screw spindle (5') securely against twisting, which spindle can be screwed into the clamp mounting (3) and is mounted to be able to twist relative to the connection piston bush (4).

8. Connection adaptor according to one of the claims 1 to 7,
**characterised in that**
the clamp mounting (3) has an adjustment screw (3d) on the locking clamp (3c) situated opposite the connecting piston bush (4).

9. Connection adaptor according to one of the claims 1 to 8,
**characterised in that**
the threaded sleeve (5a) surrounds the cylindrically formed clamp mounting (3) tightly.

10. Connection adaptor according to one of the claims 1 to 9,
**characterised in that**
the clamp mounting (3) and/or the twist-proof element (6) has an indexing pin (7).

11. Connection adaptor according to one of the claims 1 to 10,
**characterised in that**
between the connecting piston bush (4) and the twist-proof element (6) there is provided a sealing ring (8) on the end side for attaching to the complementary connection (2).

## Revendications

1. Adaptateur de raccordement, notamment pour des soupapes de bouteilles à gaz, muni d'une fixation de serrage (3) en forme de bride de fixation et d'une douille de piston de raccordement (4), mobile axialement par rapport à la fixation de serrage (3) au moyen d'un dispositif d'actionnement (5) et adjacente de manière étanche, en position de raccordement, à un contre-raccordement (2), **caractérisé en ce que** le dispositif d'actionnement (5) est formé d'une douille filetée (5a) à travers laquelle s'étend la douille de piston de raccordement (4) de manière centrale, la douille de piston de raccordement (4) étant mobile axialement dans la fixation de serrage (3) avec un élément de blocage anti-torsion (6) en forme de coulisseau.

2. Adaptateur de raccordement selon la revendication 1, **caractérisé en ce que** l'élément de blocage anti-torsion (6) est vissé sur la douille de piston de raccordement (4) et bloqué pour ne pas pivoter.

3. Adaptateur de raccordement selon la revendication 1 ou 2, **caractérisé en ce que** la douille de piston de raccordement (4) présente un passage central et axial (4a) pour fluides.

4. Adaptateur de raccordement selon l'une des revendications 1 à 3, **caractérisé en ce que** la douille de piston de raccordement (4) présente un profil d'entraînement (4b) formé sur elle.

5. Adaptateur de raccordement selon la revendication 4, **caractérisé en ce que** le profil d'entraînement (4b) est un hexagone mâle formé d'une seule pièce.

6. Adaptateur de raccordement selon l'une des revendications 1 à 5, **caractérisé en ce que** la douille filetée (5a) présente un moletage (5b) sur le pourtour extérieur.

7. Adaptateur de raccordement selon l'une des revendications 1 à 6, **caractérisé en ce que** la douille filetée (5a) est raccordée fixement à une broche à vis (5') qui peut être vissée dans la fixation de serrage (3) et logée de manière rotative par rapport à la douille de piston de raccordement (4).

8. Adaptateur de raccordement selon l'une des revendications 1 à 7, **caractérisé en ce que** la fixation de serrage (3) présente une vis de réglage (3d) sur la bride de serrage (3c) opposée à la douille de piston de raccordement (4).

9. Adaptateur de raccordement selon l'une des revendications 1 à 8, **caractérisé en ce que** la douille filetée (5a) entoure étroitement la fixation de serrage (3) formée de manière cylindrique.

10. Adaptateur de raccordement selon l'une des revendications 1 à 9, **caractérisé en ce que** la fixation de serrage (3) et/ou l'élément de blocage anti-torsion (6) présente(nt) une tige d'indexation (7).

11. Adaptateur de raccordement selon l'une des revendications 1 à 10, **caractérisé en ce qu**'un anneau d'étanchéité (8) est prévu du côté frontal entre la douille de piston de raccordement (4) et l'élément de blocage anti-torsion (6) pour la fixation sur le contre-raccordement (2).
